Europäisches Patentamt

European Patent Office

Office européen des brevets

(11) Publication number: 0 516 266 A2

# EUROPEAN PATENT APPLICATION

(21) Application number: 92302300.6

(51) Int. Cl.5: G06F 7/32

(22) Date of filing: 18.03.92

(30) Priority: 31.05.91 US 708610

(43) Date of publication of application:
02.12.92 Bulletin 92/49

(84) Designated Contracting States:
DE FR GB

(71) Applicant: International Business Machines
Corporation
Old Orchard Road
Armonk, N.Y. 10504(US)

(72) Inventor: Bordonaro, Frank Gerard
162-182, Wilbur Avenue, Apt. 712
Kingston, New York 12401(US)
Inventor: Brent, Glen Alan
Rd. 3, Box 162a Crestwood Road
Red Hook, New York 12571(US)
Inventor: Edwards, Roger Joseph
11 Livingston Court
Woodstock, New York 12498(US)
Inventor: Goldman, Joel
226 Heather Lane
Kingston, New York 12401(US)
Inventor: Lindquist, David Bruce
4001 Lake Springs Court
Raleigh, North Carolina 27613(US)
Inventor: Patel, Kushal Amrish
Lake Katrine Apartments No. 4H Lake Katrine
New York 12449(US)
Inventor: Williams, Peyton Randolph, Jr.
157 Marys Avenue
Kingston, New York 12401(US)

(74) Representative: Burt, Roger James, Dr. et al
IBM United Kingdom Limited Intellectual
Property Department Hursley Park
Winchester Hampshire SO21 2JN(GB)

(54) Merging sorted lists.

(57) In a system and method for merging a plurality of sorted lists using a multi-processing machine, the sorted lists are divided into a number of tasks equal to the number of processors. Pre-ordered lists which need no merging are removed initially in step 306. Search bounds are then determined in step 316 and an appropriate task size based upon the number of processors and the number of records is determined in step 308. The sorted lists are partitioned into the number of tasks equal to the number of processors in step 310. The tasks are then separately sorted in step 312 and concatenated to form a single sorted list in step 314. Advantage is taken of the multi-processing machine during the creation of the tasks, as well as the actual sorting.

Fig. 3

The present invention relates to merging a plurality of sorted lists in parallel.

Over the past several years, solutions have been sought to larger and more complex problems. This has prompted the development of faster and more powerful computers. These more powerful computers include those which use a plurality of processors working in conjunction with one another, and are thus called multi-processor computers.

These multi-processor computers can be classed into either tightly-coupled (i.e., shared memory) and loosely-coupled (i.e., unshared memory) computers. As the names imply, shared memory computers are those in which the all of the processors share the same memory, whereas in unshared memory computers each processor has its own memory which it does not share with the other processors.

The different types of multi-processor computers are particularly well suited for working with certain types of applications. Unshared memory computers usually work well in applications that allow data to be separated into blocks that reside exclusively in the memories of the individual processors and do not have to be brought together during execution of the application. Transferring data between processors is usually costly in these types of computers, and thus they attempt to limit the communication required for a particular application. Shared memory computers, however, work well with applications that require repeated access to all the data by all the processors.

The increase in speed which is possible from these multi-processor machines cannot be realized without appropriate, efficient software to take advantage of the parallel architecture. Thus, more efficient software is also a vital part of increasing the speed of problem solving. However, developing applications for a parallel processing environment is quite different and usually more complex from developing applications for the more traditional, single processor computer environments. Yet to use a multi-processor computer to its fullest extent, efficient applications are a necessity.

Many large and complex computer applications often involve sorting. Thus, the faster a computer can perform sorting, the more quickly a particular problem can be solved. An example of applications which rely heavily on sorting are those involving the manipulation and analysis of large databases. Both hierarchical and relational databases use sorting to organize database records and indices into the databases. As the size of these databases continues to increase, the speed of sorting becomes an even more significant component in the overall efficiency of an application.

In a typical application, it is advantageous first to create several sorted lists from the records in the database or databases being used. In a multi-processing environment, this can be done by allowing each processor to sort some portion of the database in parallel with the other processors. Even in a single processor environment, however, it is still advantageous to create several sorted lists as a first step towards sorting the entire database. These lists then need to be merged together somehow to form a final, sorted list.

Historically, applications involving large amounts of data have used large, single processor machines to process (e.g., sort and merge) the data due to storage and processing requirements. However, the use of multi- processing has resulted in a new emphasis on parallel applications for sorting and merging which take advantage of these new multi-processing architectures and at the same time provide good performance.

The applications typically take two forms depending upon the type of multi-processing computer used. For an unshared memory computer, the sort phase is easily parallelized by just sorting the data that exists on each processor locally. The merge phase, however, is more difficult because data records that will end up next to each other in the final output list are spread across all the processors. Determining how the records are to be broken up to form this final output list is a difficult task, and causes unshared memory computers to perform poorly in merge operations.

For a shared memory computer, the data is accessible to all processors equally. The sort phase of the overall sorting process can then be parallelized by assigning roughly equal portions of the records to each of N processors regardless of storage location. Each of these portions is called a task. The end result is N sorted tasks in the shared memory which must be merged to create a single sorted list. As these tasks comprise portions of several sorted lists, a task actually comprises a plurality of sorted sub-lists. These sub-lists need to be merged to form a single, sorted task.

One scheme for using a shared memory computer to sort records is described in an article "An Efficient Microprocessor Merge Algorithm" (P.J. Varman, B.R. Iyer, D.J. Haderle, PARABASE 90 International Conferences on Database, Parallel Architectures and their Applications, Miami Beach, Florida, March 1990, IEEE Computer Society Press, Cat. No. 90CH2728-4, pp. 276-83). However, this requires an excessive amount of access to the storage device which contains the records when the volume of records is too large to fit into shared memory. Thus, it does not efficiently account for the situation where the database being used is too large to fit into shared memory.

What is needed is a scheme for using a shared memory computer to sort a plurality of sorted lists, which can handle a situation where the database is too large for the amount of memory.

The problems which presently exist in the field of technology discussed hereinbefore are alleviated by the present invention. Specifically, the present invention provides a system and method for dividing a plurality of sorted lists into a number of tasks, merging the records in each task on a separate processor in a shared-memory multi-processing environment so that the records are sorted, and concatenating each task to form a single, sorted list.

In general, the present invention provides a high-speed merging device for merging a plurality of sorted lists each having at least one record, where the merging device comprises a random access memory (RAM) and a plurality of independently operating processors on a multi-processing machine. The processors share a common random access memory. Computer memories other than RAM may be used.

In order to merge the plurality of sorted lists, partition means are used for selecting a portion of the sorted lists to be merged. The optimal size of the portion selected is related to the capacity of the common memory. Also, pre-order detection means are used to determine whether any sorted list in the selected portion has the property that it is a pre-ordered sorted list. A sorted list is a "pre-ordered" list if each record in any of the sorted lists are either all greater or equal in value to each record in the pre-ordered sorted list or are all less than or equal in value to each record in the pre-ordered sorted list.

Allocation means are used for dividing the sorted lists within the selected portion into a number of tasks. The number of tasks may be equal to the number of independently operating processors. The records within a specific task may be such that all records in the remaining tasks are either greater or equal in value to each record in the specific task or else less than or equal in value to each record in the specific task.

Also included are means for merging the tasks in parallel so that they are sorted, and a means for concatenating the sorted tasks with each other, and with any pre-ordered lists to create a single sorted list. There may be means for concatenating the single sorted list with other single sorted lists generated from previously selected portions of the sorted lists to form a final sorted list.

The present invention extends to a method for merging a plurality of sorted lists each having at least one record, where the merging method uses a random access memory and a plurality of independently operating processors on a multi-processing machine.

The scope of the present invention is defined by the appended claims; and how it can be carried into effect is hereinafter particularly described with reference to the accompanying drawings in which:

FIGURE 1 is a high-level diagram of a system according to the present invention;

FIGURE 2 is a high-level diagram of a method according to the present invention;

FIGURE 3 is a diagram of a merge mechanism according to the present invention;

FIGURE 4 is a more detailed diagram of part of the mechanism of Figure 3;

FIGURE 5 is a more detailed diagram of another part of the mechanism of Figure 3;

FIGURE 6 is a more detailed diagram of yet another part of the mechanism of Figure 3;

FIGURE 7 is a more detailed diagram of a further part of the mechanism of Figure 3;

FIGURE 8 shows an example of the handling of five sorted lists, according to the present invention; and

FIGURE 9 is a diagram of various modules of a system according to the present invention.

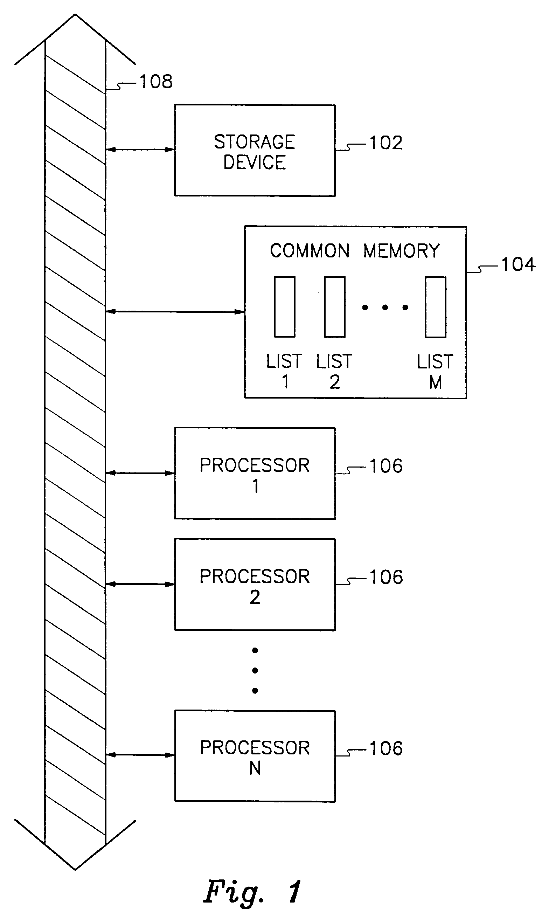

In an implementation of the present invention, a bus 108 (Figure 1) connects a storage device 102, a common memory 104 and N processors 106. The common memory 104 receives M sorted lists from the storage device 102, which are then divided into N tasks, each of which is given to one of the processors 106 to be sorted. These tasks are divided in such a way that after each task is sorted, they can be concatenated into a single, final sorted list. The records of a specific task are such that all records in any of the other tasks are either greater than or equal in value to each record in the specific task or all less than or equal in value to each record in the specific task. In this way, the M lists are "merged" together.

The common memory 104 also contains modules (not shown) which are used in the merge process by the N processors 106. Some of these modules are re-entrant. An IBM ES/9000 series computer may be used, but other computers could be used instead.

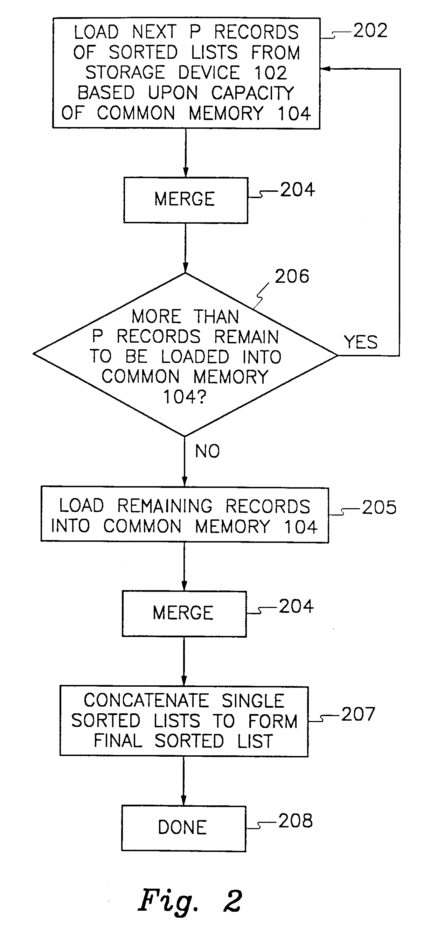

In addition to having the ability to merge M lists residing in a common memory to create a final sorted list, the system has the ability to manage situations where the number of records in the M sorted lists is greater than the memory capacity of the common memory 104. The first action 202 (Figure 2) taken is to load the next P records of the sorted lists from the storage device 102 into common memory 104, thereby forming a selected portion of the sorted lists. The exact number of records to be loaded will be based upon the capacity of the common memory 104. The same number of records is loaded from each of the sorted lists within the storage device 102 for as long as each sorted list has records to be loaded.

Once the next P records have been loaded as indicated above, the sorted lists are then merged in action 204. This creates a final, sorted list. The sorted lists are merged together in a way that accounts for the fact that the sorted lists may not all be able to fit into common memory 104 at once.

The next action 206 is to determine if there are more than P records which remain to be loaded into common memory 104. In other words, do more records need to be loaded than can all fit into common memory 104. If true, then the next P records will be loaded into common memory 104 in repeated action 202. If P or less than P records remain, then the remaining records are loaded into common memory 104 in action 205. These remaining records are then merged in action 204.

The single sorted lists which are created as a result of each of the merges are themselves concatenated together into a final sorted list in action 207. Alternatively, each of the single sorted lists is merely sent to some output device or a storage device, and not actually concatenated together. In either event, the process finally terminates in action 208.

The following description of the merging of the sorted lists in action 204 assumes that at most P records have been read into common memory 104 as in actions 202 and 204 (Figure 2), and thus at most only those records in the common memory 104 are merged at any one time.

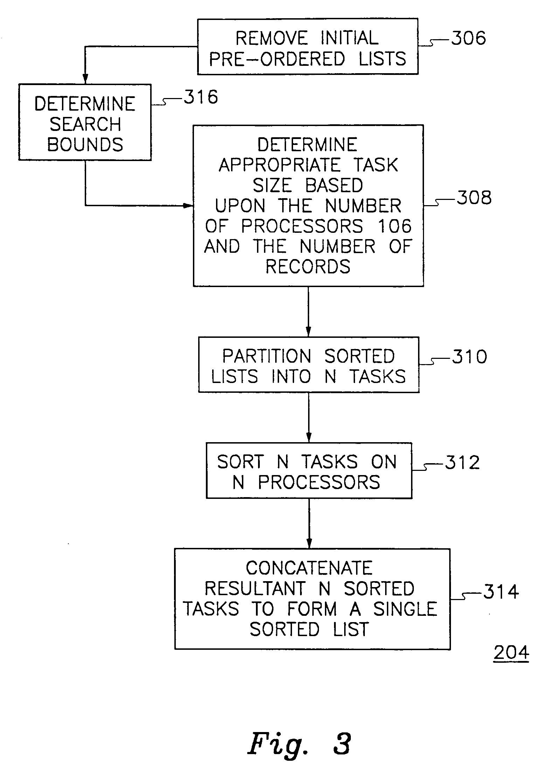

The first step 306 (Figure 3) involves the removal of any initial pre-ordered lists. In this, it is determined whether there are any initial (i.e., highest valued) sorted lists whose values do not overlap with any other of the sorted lists, and thus do not need to be merged. If this is the case, then that list or lists can be removed from the merge process.

The next step 316 is to determine the search bounds of the sorted lists which were read into common memory 104. What this means is that the bounds from which tasks will be created are set. Thus, all the P records which are loaded into common memory 104 are not necessarily going to be part of the portion from which tasks are created. This is to account for the fact that all the records in the sorted lists might not fit into common memory 104 at once.

Once the search bounds are determined, the appropriate task size is then determined in step 308 based upon the number of processors 106 and the number of initial records which are loaded into common memory 104 within the search bounds. The number of records is divided by the number of processors to determine the appropriate task size.

Because of the possible high degree of skew in the value of the records in the sorted lists, it may require much effort to obtain an exact task size for each task. To avoid expending unnecessary time and effort, a range of task sizes is allowed to be used. For example, a range of ± 10 percent of a selected task size may be allowed. This results in a more efficient partitioning scheme.

Once the task size has been determined, the sorted lists are partitioned in step 310 into N tasks. These tasks are then distributed in step 312 among the N processors, which concurrently sort the N tasks.

Finally, the resultant sorted tasks are concatenated in step 314 to form a single sorted list. In some cases, the initial pre-ordered lists are also concatenated to form a single sorted list, so that the records are in descending order (that is, the pre-ordered list or lists is or are on the "top" of the list. In other cases, the initial pre-ordered list or lists is or are just sent to some output or storage device before the remainder of the sorted lists.

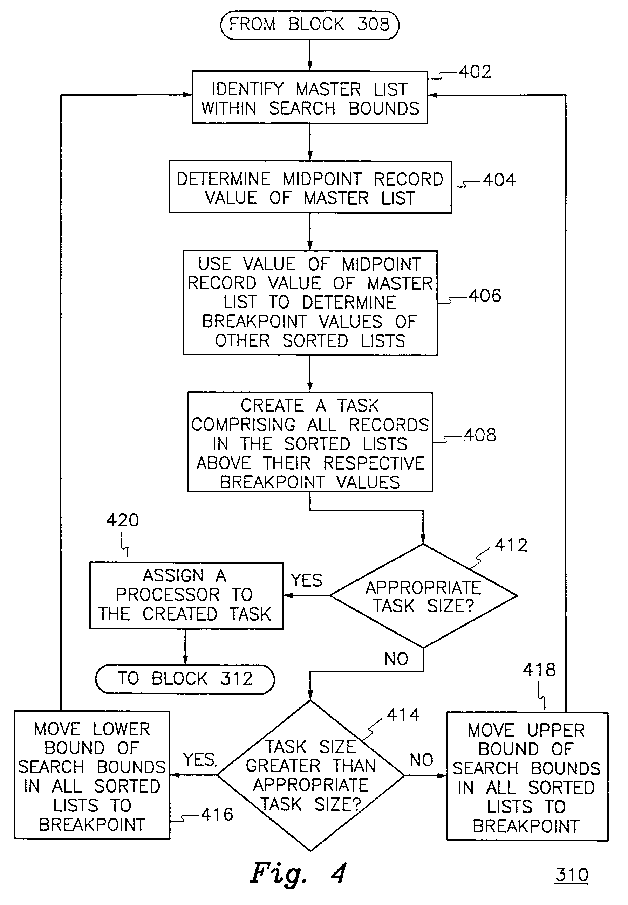

In partitioning the sorted lists into N tasks in step 310, the first step 402 (Figure 4) is to identify the "master" list within the search bounds which were set in step 316 (Figure 3). It is convenient that the "master" list is that list which contains the most records.

Once the master list is identified, then the midpoint record value of the master list is determined in step 404. This midpoint is the midpoint of the master list in light of the search bounds.

The next step 406 is to use the value of the before-determined midpoint record of the master list to determine where in the other sorted lists a record of equal or greater value exists. These values of the records of equal or greater value than the midpoint record are termed "breakpoint values".

The breakpoint values for the sorted list may be determined using a binary search method, and each of these binary searches is done using a separate processor. A more detailed explanation of binary searches is given in Knuth, "The Art Of Computer Programming," Volume 3, "Searching and Sorting," (Addison-Wesley; Reading, Mass, 1973).

Once all the breakpoint values (or next greater value) of all the sorted lists have been determined, a task comprising the records within the sorted lists having values greater than (or equal to) their respective breakpoint values and within the search bounds is created in step 408. Once created, it is determined in step 412 whether this task is of the appropriate size, as discussed hereinbefore with reference to step 308 (Figure 3).

If a task is of appropriate size, then in step 420 (Figure 4) a processor is assigned to sort the records in the task. The task is then sorted in step 312 (Figure 3).

If the task is not of the appropriate size, then in step 414 it is determined whether the task size is greater or less than the appropriate task size. If the task size is greater than the appropriate task size, then in step 416 the lower bound of the search bounds in all the sorted lists is moved to the breakpoint. Thus, for the master list, the lower bound is moved to what had been its midpoint value. For each of the other sorted lists, its breakpoint value becomes the lower search bound. The sequence then begins again with the identification of a new master list in step 402.

If, however, the task size is less than the appropriate task size, then in step 418 the upper of the search bounds in each of the sorted lists is changed to what was its former breakpoint. Once this is done, the sequence begins again with step 402.

The search bounds discussed hereinbefore only pertain to the identification of a breakpoint. The task itself always comprises those data records from the final breakpoint to the top (i.e. to the highest-valued records) of the sorted lists for which a task has not yet been created. The search bounds may be adjusted by using a binary search, or by other schemes.

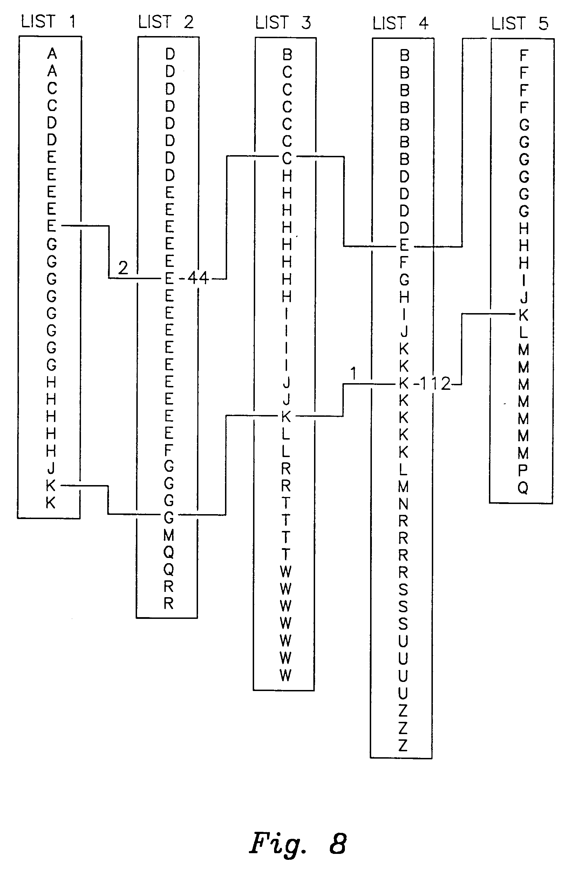

In an example of merging, one hundred and sixty four records are in five sorted lists (Figure 8) identified as Lists 1 to 5. Four processors are assumed to be in use. As there are 164 records and four processors, the exact "appropriate" task size would be 164 divided by 4, or 41. Assuming that a 10 percent range is acceptable, a range of 37 to 45 records would be an appropriate task size.

The master list is first identified as List 4. The midpoint record value of List 4 is shown to be one of the "K" values. After the midpoint record value has been determined, tile breakpoint values of all the other sorted lists are determined based upon this midpoint value. Thus, the breakpoint of the other lists will be at value "K" or above. In the case of List 2, where there is no "K" value, the next value above "K" (in this case "G") is used as the breakpoint.

A task is then created which consists of all the records above or equal to this breakpoint. Thus, the breakpoint line is line 1, and one hundred and twelve records are in the task. Alternatively, the task could consist of only records above the breakpoint.

One hundred and twelve records is not an appropriate task size, as it is not within the range of 37 to 45 records. Thus, the decision in step 412 (Figure 4) would be NO. The decision in step 414 would be YES, as the number of records is greater than the appropriate task size. Step 416 causes the former breakpoint line 1 (Figure 8) to now become the lower search bounds.

The process then begins anew, with the identification of the master list within the search bounds. This would now be List 2, as it contains the most records between the top of the sorted lists and the new lower search bounds. A new breakpoint is determined at value "E", and the new breakpoints are then determined for all of the sorted lists. The new breakpoint line is line 2 having forty four records. As the task which comprises all the data records above line 2 is within the appropriate range, these data records are assigned to a processor in accordance with step 420 (Figure 4), and the sorted lists are merged together.

The example given is only an example, and any number of sorted lists having any number and type of records may also be merged.

In determining the search bounds in step 316 (Figure 3) prior to partitioning the sorted lists into N tasks, account is taken of the situation where the records in the sorted lists are too numerous to fit into the common memory 104 at once. Thus, in actions 202 and 205 (Figure 2) as many records of the sorted lists as possible (i.e., P or less records) have been loaded into common memory 104.

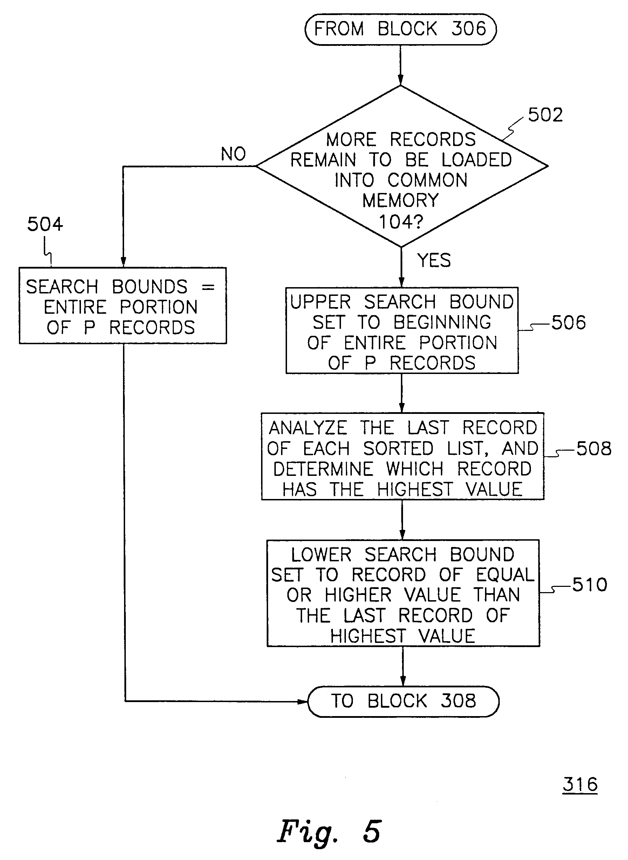

A determination is first made in step 502 (Figure 5) as to whether there are any more records that remain to be loaded into common memory 104 from the storage device 102. If there are no more records left, then the search bounds are set in step 504 to the entire portion of all the P records of all the sorted lists.

If, however, more records remain to be loaded into common memory 104, then in step 506 the upper search bound is set to the beginning of the entire portion of the P records (that is, to the top of each of the sorted lists). The last record of each of the sorted lists is then analyzed in step 508 and a determination is made as to which of these "last" records has the highest value.

The lower search bound is then set in step 510 to a record of equal or higher value than this last record of highest value for each of the sorted lists. In other words, if the highest of the record values is a "G", then for each of the other sorted lists, the lower bound will be set to either a "G" or the record of next highest value (if there is no "G"). The reason this is done is that it may otherwise be the case that there may be some records still remaining on the storage device 102 which should have been merged with some of these lists. This is because when the P records are loaded into the common memory 104, the sorted list having the last record with the highest value may have records still on the storage device 102 which are of lower value than some of the records on the other sorted lists which have been loaded into common memory 104. The scheme described hereinbefore alleviates this problem.

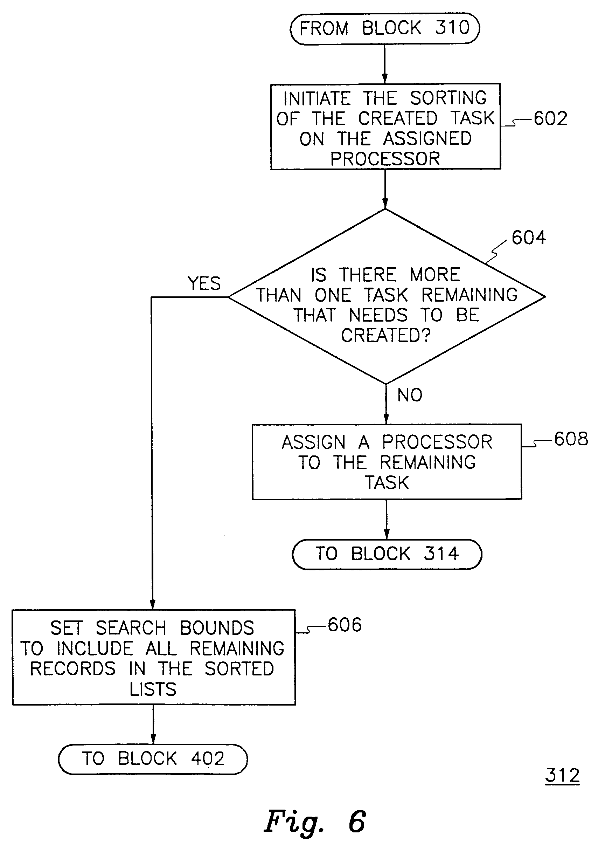

In sorting N tasks on N processors in step 312 (Figure 3), the sort process occurs for each of the N processors subsequent to the creation of each of the N tasks in step 310. The first step 602 (Figure 6) is to initiate the sorting of the created task on the assigned processor. Thus, as soon as a task is created and assigned a processor, the sorting process is subsequently initiated. A determination is then made in step 604 as to whether there is more than one task that needs to be created from the portion of the sorted lists within the bounds defined in step 316 (Figures 3 and 5).

If there is more than one task remaining (that is, there are more records in the common memory 104 which have not been partitioned into a task), then in step 606 (Figure 6) the search bounds are set to include all the remaining records in the sorted lists. Thereafter control will be returned to step 402 (Figure 4) so that the next task can be created.

If, however, there is only one task remaining that needs to be created, a processor is simply assigned in step 608 (Figure 6) to that remaining task for sorting. The task is sorted, and control then goes to step 314 (Figure 3).

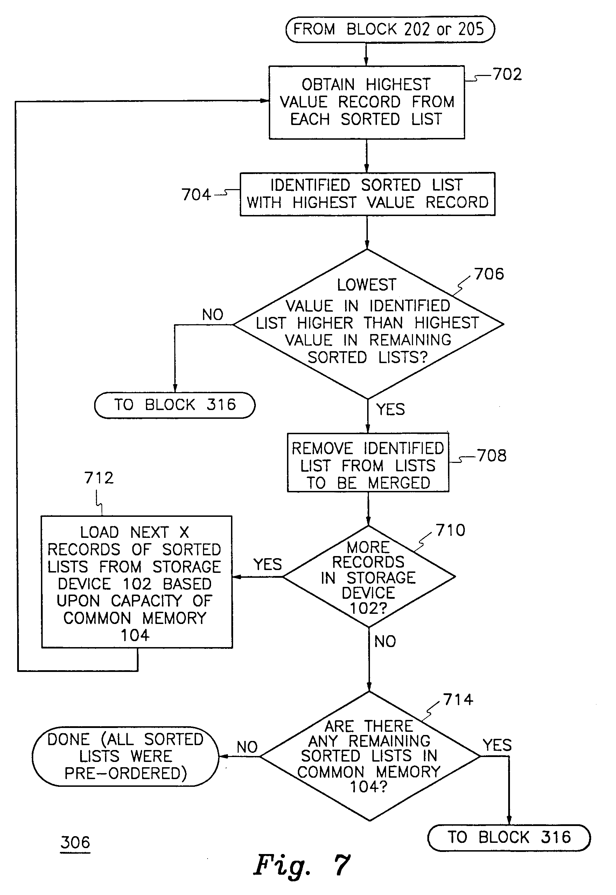

The action 204 (Figure 2) of merging begins with a determination in step 306 (Figure 3) as to whether or not there are any pre-ordered sorted lists amongst the sorted lists loaded into common memory 104. The highest value record from each of the sorted lists is obtained in step 702 (Figure 7). Thus, a determination is made as to which of the sorted lists contains the record with the highest value. The sorted list containing the record with the highest value is then identified in step 704.

The record having the lowest value in the list which had been identified as containing the highest value is then analyzed in step 706, and a determination is made as to whether the lowest value in this list is higher in value than any other record in any of the remaining sorted lists. If the answer is NO, then the identified sorted list contains values which are lower than some of the values in other sorted lists. Therefore, the identified sorted list needs to be merged with the other sorted lists, and cannot be removed as a pre-ordered list. Thus, control then goes to step 316 (Figure 5).

If, however, the record with the lowest value in the identified sorted list has a value higher than all the records in the other remaining sorted lists, then the identified sorted list are removed in step 708 (Figure 7) from the lists which are to be merged.

If a pre-ordered list had been found and removed, then the next step 710 is to determine whether there are any more records in storage device 102 which have not yet been loaded into common memory 104. If there are, then the next X records from storage device 102 are loaded in step 712 into common memory 104, where X is equal to the number of records in the removed pre-ordered list (or the number of records remaining in the storage device which have not yet been loaded if this number is less than X). In this way, as soon as a pre-ordered list is removed from the common memory 104, additional records can immediately be loaded. This increases the efficiency of the system. The sequence then begins anew at step 702.

If there are no more records in storage device 102 to be loaded, a determination is made in step 714 as to whether there are any remaining sorted lists in common memory 104. If there are, then they need to be merged, and thus control is sent to step 316 (Figure 5).

If there are no more remaining sorted lists in common memory 104, this implies that all the sorted lists were pre-ordered. That is, none of the sorted lists in the storage device 102 had overlapping records, and thus no merging whatsoever needed to be done. By checking for the possibility that pre-ordered lists exist, the present invention provides a more efficient way to create a single sorted list by not merging those sorted lists which need not be merged.

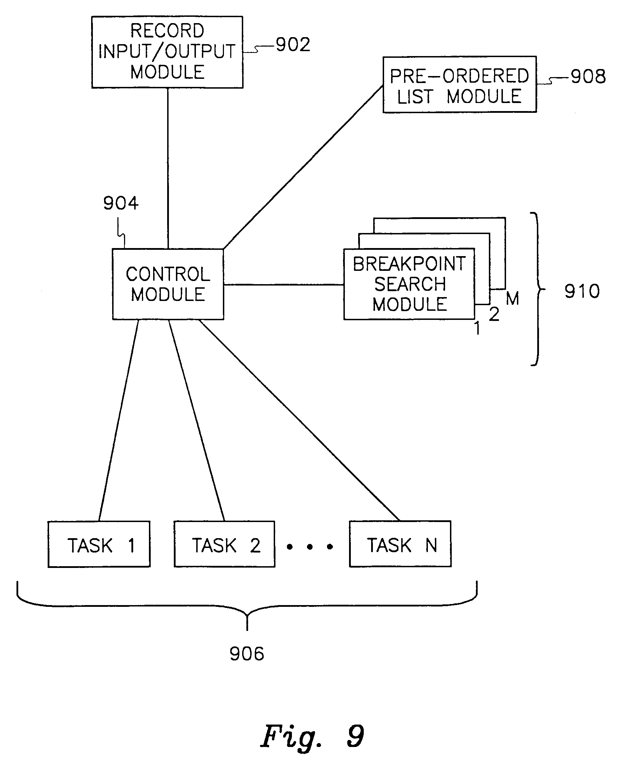

A record input/output module 902 (Figure 9) performs the function of loading records from the storage device 102 into common memory 104. The final sorted lists can be stored on the storage device 102, and this would be done via the record input/output module 902.

A control module 904 performs most of the functions required as described hereinbefore. These include the determination of the breakpoints within a master list, and of managing facilities which invoke each of the tasks on the N processors 106.

The N tasks 906 are N functions for sorting the N tasks individually and simultaneously. Thus, each of the N processors may execute a function to sort each of the N tasks.

A breakpoint search module 910 is used to determine the breakpoints in the sorted lists (other than the master list). For each of M sorted lists in a task, a different one of the processors 106 may be assigned to find the breakpoint for each sorted list. This may be done using re-entrant methods, where each processor uses the same software within common memory 104. Thus, breakpoint search module 910 is shown as M separate modules. Even though there are actually not M separate modules (due to the re-entrant nature of the software), it nonetheless behaves as though there are.

A pre-ordered list module 908 is used to perform the pre-ordered list removal.

As described hereinbefore, the system merges N sorted lists which are assumed to be sorted in highest-to-lowest order, resulting in a single sorted list having records from highest-to-lowest record order. However, it will be understood that the sorting of lists may be from lowest-to-highest order.

The present invention may be implemented in hardware, software or a combination thereof. In such embodiments, the various components and steps would be implemented in hardware and/or software to perform the required functions.

While the invention has been particularly shown and described with reference to preferred embodiments thereof, it will be understood by those skilled in the art that various changes in form and details may be made therein without departing from the scope of the invention.

**Claims**

1. A merging device for merging a plurality of sorted lists, comprising means for dividing the plurality of sorted lists into a number of tasks, means for merging records in each task on a separate processor in a shared memory multi-processing system so that the records are sorted, and means for concatenating each task to form a single, sorted list.

2. A merging device for merging a plurality of sorted lists, wherein each sorted list has at least one record, comprising a random access memory (104), a plurality of independently operating processors (106) on a multi-processing machine, the processors sharing the random access memory, partition means (310) for selecting a portion of the sorted lists to be loaded into the random access memory and merged, thereby forming a selected portion of the sorted lists, wherein the number of records in the selected portion is related to the capacity of the random access memory, pre-order detection means (306) for determining whether any sorted list in the selected portion is a pre-ordered sorted list, such that each record in any of the sorted lists are either all greater or equal in value to each record in the pre-ordered sorted list or all less than or equal in value to each record in the pre-ordered sorted list, allocation means (310) for dividing the sorted lists in the selected portion into a plurality of tasks equal to the number of the independently operating processors, wherein an appropriate task size is determined based upon the number of records in the selected portion and the number of the independently operating processors, wherein the records of a specific task of the plurality of tasks are such that each record in any other of the plurality of tasks are either all greater or equal in value to each record in the specific task or all less than or equal in value to each record in the specific task, merge means (204) for merging the tasks in parallel, creating sorted tasks, and concatenation means (207) for concatenating the sorted tasks with each other, and with any pre-ordered lists to create a single sorted list, and for concatenating the single sorted list with other single sorted lists generated from previously selected portions of the sorted lists to form a final sorted list.

3. A device according to claim 2, wherein the sorted lists within the partition have an upper and a lower bound, and wherein the lower bound is set by analyzing each of the lowest records in each of the sorted lists within the partition and determining which record of the lowest records has a highest value, wherein the lower bound is set based upon the highest value.

4. A device according to claim 2 or 3, wherein the allocation means uses a binary search to divide the sorted lists into a number of tasks.

5. A device according to claim 4, wherein the allocation means divides the sorted lists to form a task in parallel.

6. A device according to claim 2, 3, 4 or 5, wherein the allocation means comprises breakpoint means for determining a breakpoint value in each of the sorted lists and for creating each of the number of tasks based upon the records in the sorted lists having a value equal to or greater than the breakpoint value.

7. A device according to claim 6, wherein the breakpoint values are determined in parallel by the plurality of independently operating processors.

8. A device according to claim 2, 3, 4, 5, 6 or 7, wherein the partition means includes means for forming the selected portion such that each record in the selected portion has a value greater or equal to any record remaining to be loaded into the random access memory.

9. A method of merging a plurality of sorted lists each having at least one record, comprising the steps of:
   (1) selecting a portion of the sorted lists to be merged, thereby forming a selected portion;
   (2) loading the selected portion into a random access memory, wherein the number of records in the selected portion is related to the capacity of the random access memory;

(3) determining whether any sorted list in the selected portion is a pre-ordered sorted list, such that each record in any of the sorted lists are either all greater or equal in value to each record in the pre-ordered sorted list or all less than or equal in value to each record in the pre-ordered sorted list;

(4) dividing the sorted lists in the selected portion into a plurality of tasks equal to a number of independently operating processors;

(5) determining an appropriate task size based upon the number of records in the selected portion and the number of the independently operating processors, wherein the records of a specific task are such that the records in any other task are either all greater or equal in value to each record in the specific task or all less than or equal in value to each record in the specific task;

(6) merging the tasks in parallel, creating sorted tasks;

(7) concatenating the sorted tasks with each other, and with any pre-ordered sorted lists to create a single sorted list;

(8) re-executing the steps beginning at the step (1) if portions of the sorted lists have not been loaded into the random access memory, creating a plurality of single sorted lists; and

(9) concatenating the plurality of single sorted list to form a final sorted list.

10. A method according to claim 9, wherein the step (4) comprises the step of using a binary search to divide the sorted lists into a number of tasks.

11. A method according to claim 10, including the step of using the independently operating processors to divide the sorted lists into a number of tasks in parallel.

12. A method according to claim 9, 10 or 11, wherein the step (1) of forming the selected portion comprises the step of analyzing each record in the selected portion and ensuring that each record has a value greater or equal to any record remaining to be loaded into said random access memory by the step (2).

STORAGE
DEVICE —102

—108

COMMON MEMORY —104

LIST
1

LIST
2

• • • •

LIST
M

PROCESSOR
1 —106

PROCESSOR
2 —106

•
•
•

PROCESSOR
N —106

*Fig. 1*

LOAD NEXT P RECORDS OF SORTED LISTS FROM STORAGE DEVICE 102 BASED UPON CAPACITY OF COMMON MEMORY 104 —202

MERGE —204

MORE THAN P RECORDS REMAIN TO BE LOADED INTO COMMON MEMORY 104? —206   YES

NO

LOAD REMAINING RECORDS INTO COMMON MEMORY 104 —205

MERGE —204

CONCATENATE SINGLE SORTED LISTS TO FORM FINAL SORTED LIST —207

DONE —208

*Fig. 2*

REMOVE INITIAL PRE-ORDERED LISTS —306

DETERMINE SEARCH BOUNDS —316

DETERMINE APPROPRIATE TASK SIZE BASED UPON THE NUMBER OF PROCESSORS 106 AND THE NUMBER OF RECORDS —308

PARTITION SORTED LISTS INTO N TASKS —310

SORT N TASKS ON N PROCESSORS —312

CONCATENATE RESULTANT N SORTED TASKS TO FORM A SINGLE SORTED LIST —314

204

*Fig. 3*

*Fig. 4*

310

Fig. 5

316

```
        ┌─────────────────────────┐
        │   FROM  BLOCK  310      │
        └─────────────────────────┘
                    │
                    ▼
        ┌─────────────────────────┐
        │  INITIATE  THE  SORTING │
        │  OF  THE  CREATED  TASK │──602
        │   ON  THE  ASSIGNED     │
        │      PROCESSOR          │
        └─────────────────────────┘
                    │
                    ▼
                   ╱  ╲        604
                 ╱      ╲
YES            ╱  IS THERE MORE ╲
◄─────────────   THAN ONE TASK REMAINING
              ╲  THAT  NEEDS  TO  BE ╱
                ╲   CREATED?   ╱
                  ╲         ╱
                    ╲     ╱
                      │ NO
                      ▼
        ┌─────────────────────────┐
        │  ASSIGN  A  PROCESSOR   │──608
        │   TO  THE  REMAINING    │
        │        TASK             │
        └─────────────────────────┘
                    │
                    ▼
        ┌─────────────────────────┐
        │    TO  BLOCK  314       │
        └─────────────────────────┘
```

```
┌─────────────────────────┐
│  SET  SEARCH  BOUNDS    │──606
│ TO  INCLUDE  ALL  REMAINING
│ RECORDS  IN  THE  SORTED│
│        LISTS            │
└─────────────────────────┘
            │
            ▼
┌─────────────────────────┐
│    TO  BLOCK  402       │
└─────────────────────────┘
```

312

*Fig. 6*

```
                    ( FROM BLOCK 202 or 205 )
                               │
                               ▼
                    ┌──────────────────────┐
                    │ OBTAIN HIGHEST       │─── 702
                    │ VALUE RECORD FROM    │
                    │ EACH SORTED LIST     │
                    └──────────────────────┘
                               │
                               ▼
          ┌──────────────────────────────────┐
   704 ───│ IDENTIFIED SORTED LIST           │
          │ WITH HIGHEST VALUE RECORD        │
          └──────────────────────────────────┘
                               │
                               ▼
                          ╱──────────╲          706
                     ╱    LOWEST       ╲
              ╱    VALUE IN IDENTIFIED    ╲
          NO ╱   LIST HIGHER THAN HIGHEST   ╲
      ◄──────    VALUE IN REMAINING
              ╲    SORTED LISTS?          ╱
                 ╲──────────────────────╱
                               │ YES
      ┌──────────────┐         ▼
      │ TO BLOCK 316 │   ┌──────────────────┐
      └──────────────┘   │ REMOVE IDENTIFIED│─── 708
                         │ LIST FROM LISTS  │
   712                   │ TO BE MERGED     │
    │                    └──────────────────┘
    ▼                              │
┌──────────────────┐              ▼
│ LOAD NEXT X      │         ╱──────────╲   710
│ RECORDS OF SORTED│   YES  ╱   MORE     ╲
│ LISTS FROM STORAGE│◄──────   RECORDS    
│ DEVICE 102 BASED │        ╲  IN STORAGE ╱
│ UPON CAPACITY OF │         ╲  DEVICE   ╱
│ COMMON MEMORY    │           ╲ 102? ╱
│ 104              │              │ NO
└──────────────────┘              ▼
                            ╱──────────╲   714
                      ╱   ARE THERE      ╲
                  ╱    ANY REMAINING       ╲
     ┌─────────┐ NO  SORTED LISTS IN    YES
     │ DONE (ALL◄────  COMMON MEMORY    ────► ┌──────────────┐
     │ SORTED   ╲      104?          ╱         │ TO BLOCK 316 │
     │ LISTS WERE ╲──────────────────╱         └──────────────┘
     │ PRE-ORDERED)
     └─────────┘
   306
```

*Fig. 7*

Fig. 8

*Fig. 9*